# DEMANDE DE BREVET EUROPEEN

(11) **EP 0 778 230 A1**
(43) Date de publication de la demande: **11.06.1997**
(21) Numéro de dépôt: 96402654.6
(22) Date de dépôt: 06.12.1996
(51) Int. Cl.: B65G 29/00, F16H 27/06

(54) **Plateau tournant, notamment pour carrousel de traitement de bouteilles de gaz**

(30) Priorité: 08.12.1995 FR 9514532
(71) Demandeur: SIRAGA S.A.(société anonyme), F-36500 Buzancais (FR)
(72) Inventeur: Rufflet, Jaques, 36130 Deols (FR); Pitois, Jean-Louis, 37150 Luzille (FR); Pion, Michel, 36500 Buzancais (FR)
(74) Mandataire: Lemoine, Robert

(57) **Abrégé**

Le plateau tournant comporte plusieurs postes de traitement (P₁, ...,P₁₆) et est commandé en rotation par un dispositif d'entraînement (1) comprenant des organes de guidage radiaux (2), un bras (3) portant un galet (4a,4b) au voisinage de chacune de ses extrémités, ce bras étant monté rotatif autour d'un axe fixe (5) situé à égale distance des galets, et un organe moteur (7) pour entraîner le bras (3) en rotation, les deux galets (4a,4b) entrant à tour de rôle dans les organes de guidage (2) successifs et se déplaçant dans ceux-ci d'abord dans un sens puis dans l'autre chaque fois que l'organe moteur (7) est actionné.

Les organes de guidage (2) sont constitués par des couloirs situés à la périphérie du plateau et formant entre eux des angles égaux aux angles délimités par deux postes de traitement successifs, ces couloirs ayant une section transversale en U et des parois longitudinales espacées l'une de l'autre de telle sorte que les galets (4a,4b) puissent prendre appui sur elles avec le jeu nécessaire pour éviter tout risque de coincement.

## Description

La présente invention concerne un plateau tournant, notamment pour carrousel de traitement de bouteilles de gaz, sur lequel sont prévus plusieurs postes de traitement équidistants angulairement et qui est destiné à tourner, sous la commande d'un dispositif d'entraînement pas à pas, chaque fois suivant un angle égal à l'angle délimité par deux postes de traitement successifs, le dispositif d'entraînement comprenant des organes de guidage radiaux, un bras portant un galet au voisinage de chacune de ses extrémités, ce bras étant monté rotatif autour d'un axe fixe situé à égale distance des galets, et un organe moteur pour entraîner le bras en rotation, les deux galets entrant à tour de rôle dans les organes de guidage successifs et se déplaçant dans ceux-ci d'abord dans un sens puis dans l'autre chaque fois que l'organe moteur est actionné.

Les dispositifs d'entraînement pas à pas que l'on utilise actuellement pour entraîner en rotation les plateaux tournants de ce type ne permettent pas d'immobiliser ces derniers dans des positions précises.

Les opérations qui doivent être effectuées au niveau des différents postes de traitement ne peuvent par conséquent être réalisées qu'après un repositionnement ultérieur des plateaux tournants dans la position correcte, ce qui prend du temps et limite les possibilités d'utilisation de ces plateaux tournants.

Par ailleurs, les organes moteurs des dispositifs d'entraînement pas à pas actuels doivent être relativement puissants pour entraîner les plateaux tournants. Cette exigence les rend toutefois encombrants et coûteux.

La présente invention se propose plus particulièrement de remédier à ces inconvénients et, pour ce faire, elle a pour objet un plateau tournant du type précité, qui se caractérise en ce que les organes de guidage sont constitués par des couloirs situés à la périphérie du plateau et formant entre eux des angles égaux aux angles délimités par deux postes de traitement successifs, ces couloirs ayant une section transversale en U et des parois longitudinales espacées l'une de l'autre de telle sorte que les galets puissent prendre appui sur elles avec le jeu nécessaire pour éviter tout risque de coincement.

Grâce à cette disposition, le plateau peut maintenant être immobilisé dans des positions successives précises, même si les couloirs sont réalisés et mis en place avec des tolérances de fabrication et de montage relativement larges. Le personnel n'a donc pas à intervenir après l'arrêt de l'organe moteur.

Les opérations qu'il convient d'effectuer au niveau des différents postes de traitement peuvent en outre être réalisées aussitôt après l'immobilisation du plateau tournant, ce qui permet d'augmenter les cadences de fonctionnement.

Il suffit par ailleurs de disposer de peu d'énergie pour pouvoir entraîner le plateau tournant en rotation. Des organes moteurs moins puissants, moins encombrants et moins coûteux que ceux qui sont actuellement nécessaires, peuvent donc être utilisés.

Selon un mode de réalisation particulier de l'invention, les galets restent dans les couloirs lors de l'arrêt de l'organe moteur, et en sortent dès que celui-ci est à nouveau actionné.

Le plateau tournant peut ainsi être immobilisé fermement dans ses positions d'arrêt successives, ce qui peut éviter des déréglages intempestifs sous l'action de vibrations ou autres sources de perturbation.

Avantageusement, les parois des couloirs sont biseautées au niveau de leur extrémité qui est tournée vers la périphérie du plateau.

L'introduction des galets dans les couloirs peut ainsi être réalisée plus facilement lors de l'actionnement de l'organe moteur.

Un mode d'exécution de la présente invention sera décrit ci-après à titre d'exemple nullement limitatif en référence aux dessins annexés dans lesquels :
- la figure 1 est une vue de dessus schématique d'un plateau tournant conforme à l'invention, ce plateau faisant partie d'un carrousel d'épreuve de bouteilles de gaz ;
- la figure 2 est une vue de face schématique et partielle prise selon la flèche A de la figure 1 ; et
- les figures 3 à 8 sont des vues de dessus schématiques et partielles destinées à illustrer le fonctionnement du dispositif d'entraînement pas à pas du plateau conforme à l'invention.

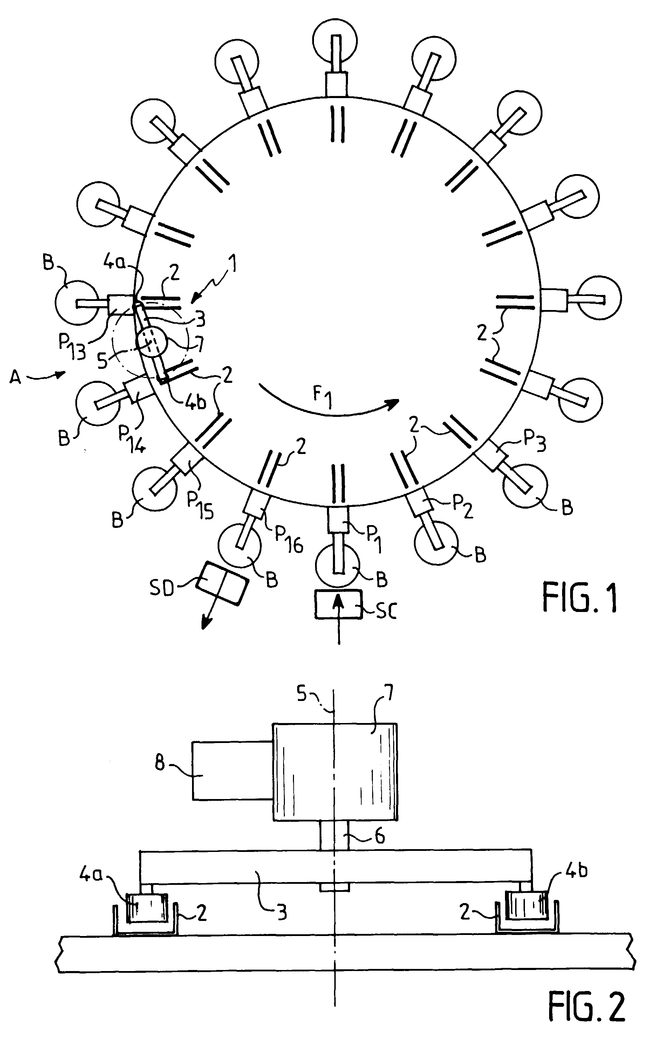

Le plateau tournant que l'on peut voir sur la figure 1 fait partie d'un carrousel d'épreuve de bouteilles de gaz, mais il va de soi qu'il pourrait entrer dans la constitution d'un carrousel conçu pour effectuer d'autres opérations sur des bouteilles de gaz, ou même d'un carrousel utilisable dans un domaine technique sans rapport avec l'industrie du gaz.

Ce plateau comprend plusieurs postes de traitement équidistants P₁, P₂, ..., P₁₆ répartis le long de sa périphérie et destinés à supporter des bouteilles de gaz B devant être soumises à une épreuve de résistance à la pression.

Les bouteilles de gaz à éprouver sont amenées les unes après les autres dans une station de chargement SC et introduites une à une dans les différents postes de traitement chaque fois que ceux-ci viennent devant la station SC lorsque le plateau est entraîné en rotation dans le sens de la flèche F₁.

Quant aux bouteilles éprouvées, elles sont amenées les unes après les autres devant une station de déchargement SD située en amont de la station de chargement SC, en considérant le sens de rotation du plateau, et transférées dans la station SD chaque fois qu'un poste de traitement parvient devant celle-ci.

Le plateau tourne dans le sens de la flèche F₁ sous la commande d'un dispositif d'entraînement pas à pas 1 qui lui fait décrire chaque fois un angle égal à l'angle délimité par deux postes de traitement successifs.

Dans le mode de réalisation représenté, le plateau tournant comprend seize postes de traitement et tourne donc suivant un angle de 22° 30' entre deux arrêts successifs. Il va de soi que le plateau pourrait comprendre un nombre de postes de traitement différent de 16.

Le dispositif d'entraînement 1 comprend tout d'abord des organes de guidage 2 disposés radialement sur la face supérieure du plateau. Ces organes qui sont aussi nombreux que les postes de traitement P₁, P₂, ..., P₁₆, forment donc entre eux des angles égaux aux angles délimités par deux postes de traitement successifs, c'est-à-dire des angles de 22° 30'.

Le dispositif d'entraînement 1 comprend également un bras 3 portant deux galets 4a et 4b situés respectivement au voisinage de ses extrémités.

Comme le montre clairement la figure 2, le bras 3 est monté rotatif autour d'un axe fixe 5 équidistant de ses extrémités et des axes de rotation des galets 4a et 4b et est solidaire en rotation de l'arbre de sortie 6 d'un organe moteur conventionnel 7 porté par un support fixe 8, cet organe étant de préférence un motoréducteur.

Le bras 3 est dimensionné et positionné de telle sorte que les deux galets 4a et 4b viennent alternativement en prise avec les organes de guidage 2 successifs chaque fois que l'organe moteur 7 est actionné. Plus précisément, pendant l'actionnement de celui-ci, l'un des galets vient en prise avec un organe de guidage 2 et se déplace dans celui-ci d'abord dans un sens puis dans l'autre tout en faisant tourner le plateau dans le sens de la flèche F₁. Il reste ensuite en prise avec cet organe de guidage lors de l'arrêt de l'organe moteur, immobilisant ainsi le plateau dans une position fixe prédéterminée, et ce jusqu'à ce que l'organe moteur soit à nouveau actionné.

Dans l'exemple de réalisation représenté sur les dessins, les organes de guidage 2 sont constitués par des couloirs ayant une section transversale en U et dont les parois longitudinales sont espacées l'une de l'autre de telle sorte que les galets 4a et 4b puissent prendre appui sur elles sans risquer d'être coincés pendant la rotation du plateau.

Par ailleurs, les parois longitudinales des couloirs sont biseautées au niveau de leur extrémité qui est tournée vers la périphérie du plateau, de façon à faciliter l'introduction des galets 4a et 4b dans lesdits couloirs.

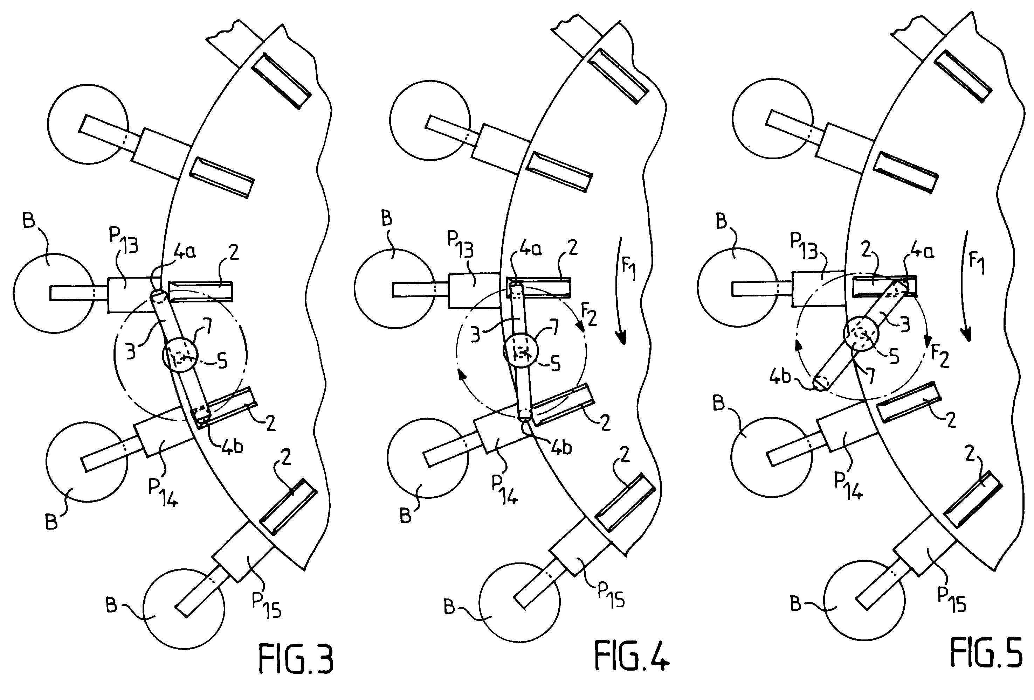

On va maintenant décrire le fonctionnement du dispositif d'entraînement 1 en se référant aux figures 3 à 8.

On notera tout d'abord que sur la figure 3, qui représente le bras 3 dans la même position que sur la figure 1, le groupe moteur 7 est arrêté, tandis que le galet 4b est dans le couloir adjacent au poste de traitement P₁₄ et que le galet 4a est devant l'entrée du couloir adjacent au poste de traitement P₁₃.

Dans cette position, le bras 3 est perpendiculaire au couloir adjacent au poste P₁₄, le galet 4b immobilisant le plateau.

Lorsqu'on actionne le groupe moteur 7, le bras 3 tourne dans le sens de la flèche F₂ tandis que le galet 4a s'engage dans le couloir adjacent au poste P₁₃, et que le galet 4b sort du couloir adjacent au poste P₁₄, comme représenté sur la figure 4. On précisera ici que le galet 4a fait tourner le plateau dans le sens de la flèche F₁ dès que le bras 3 est perpendiculaire au couloir adjacent au poste P₁₃.

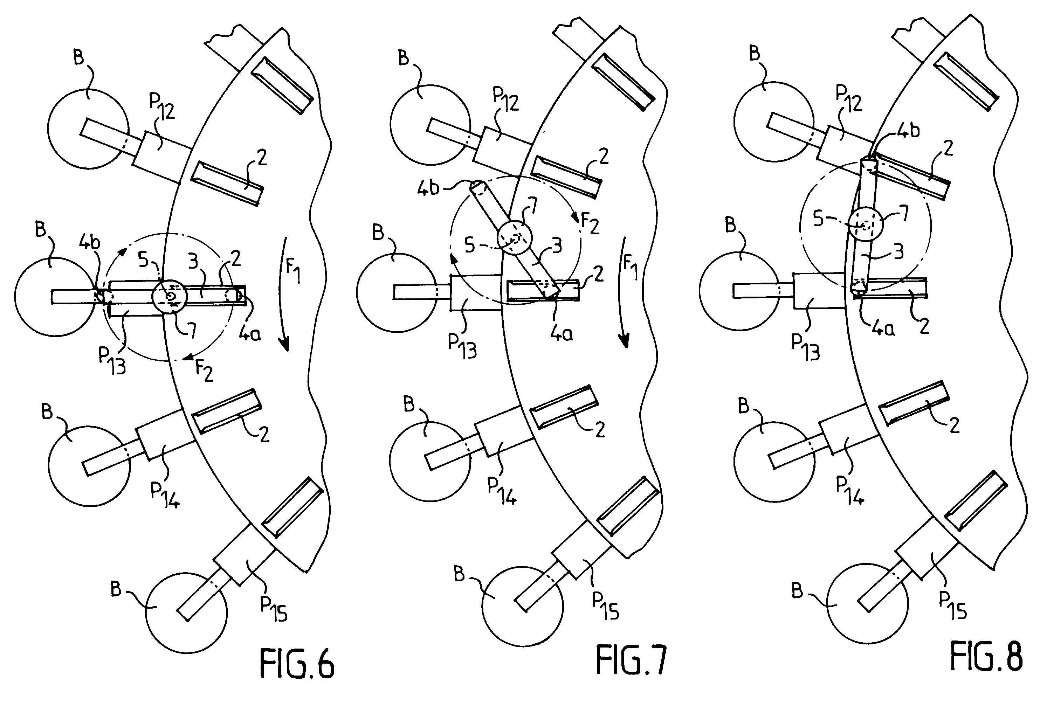

Pendant que le bras 3 tourne dans le sens de la flèche F₂ sous la commande du groupe moteur 7, le galet 4a se déplace dans le couloir adjacent au poste P₁₃, en direction du centre du plateau, comme représenté sur la figure 5.

Sous l'action du galet 4a, le plateau tourne dans le sens de la flèche F₁ avec une vitesse croissante.

Lorsque le bras 3 est dans le prolongement du couloir adjacent au poste P₁₃, comme représenté sur la figure 6, la distance du galet 4a au centre du plateau est minimale. Dans cette position, la vitesse de rotation du plateau dans le sens de la flèche F₁ est maximale.

Le galet 4a se déplace ensuite en sens inverse dans le couloir adjacent au poste P₁₃, comme représenté sur la figure 7. Il fait maintenant tourner le plateau une vitesse décroissante dans le sens de la flèche F₁.

Enfin, le groupe moteur 7 s'arrête lorsque le bras 3 est perpendiculaire au couloir adjacent au poste P₁₃, comme représenté sur la figure 8. Dans cette position, le galet 4a reste dans le couloir précité et immobilise le plateau dans une position précise. Quant au galet 4b, il est maintenant devant l'entrée du couloir adjacent au poste P₁₂.

Il va de soi que le cycle qui vient d'être décrit sera exécuté par le galet 4b lorsque le groupe moteur 7 sera à nouveau actionné pour déplacer les bouteilles B d'un poste de traitement au poste suivant.

Dans le mode de réalisation qui vient d'être décrit, le dispositif d'entraînement 1 est situé du côté de la face supérieure du plateau tandis que les postes de traitement sont prévus à la périphérie de ce dernier.

Rien ne s'oppose cependant à ce que le dispositif d'entraînement 1 soit situé du côté de la face inférieure du plateau et que les postes de traitement soient prévus sur la face supérieure de ce dernier.

## Revendications

1. Plateau tournant, notamment pour carrousel de traitement de bouteilles de gaz, sur lequel sont prévus plusieurs postes de traitement (P₁, ..., P₁₆) équidistants angulairement et qui est destiné à tourner, sous la commande d'un dispositif d'entraînement pas à pas (1), chaque fois suivant un angle égal à l'angle délimité par deux postes de traitement successifs, le dispositif d'entraînement (1) comprenant des organes de guidage radiaux (2), un bras (3) portant un galet (4a,4b) au voisinage de chacune de ses extrémités, ce bras étant monté rotatif autour d'un axe fixe (5) situé à égale distance des galets, et un organe moteur (7) pour entraîner le bras (3) en rotation, les deux galets (4a,4b) entrant à tour de rôle dans les organes de guidage (2) successifs et se déplaçant dans ceux-ci d'abord dans un sens puis dans l'autre chaque fois que l'organe moteur (7) est actionné, caractérisé en ce que les organes de guidage (2) sont constitués par des couloirs situés à la périphérie du plateau et formant entre eux des angles égaux aux angles délimités par deux postes de traitement successifs, ces couloirs ayant une section transversale en U et des parois longitudinales espacées l'une de l'autre de telle sorte que les galets (4a,4b) puissent prendre appui sur elles avec le jeu nécessaire pour éviter tout risque de coincement.

2. Plateau selon la revendication 1, caractérisé en ce que les galets (4a,4b) restent dans les couloirs (2) lors de l'arrêt de l'organe moteur (7), et en sortent dès que celui-ci est à nouveau actionné.

3. Plateau selon la revendication 1 ou 2, caractérisé en ce que les parois des couloirs (2) sont biseautées au niveau de leur extrémité qui est tournée vers la périphérie du plateau.
